# EUROPÄISCHE PATENTSCHRIFT

(11) **EP 2 099 598 B1**
(45) Veröffentlichungstag und Bekanntmachung des Hinweises auf die Patenterteilung: **27.07.2016**
(21) Anmeldenummer: 07802289.4
(22) Anmeldetag: 13.09.2007
(51) Int. Cl.: B29C 47/08, B29C 47/42

(54) **MEHRWELLENEXTRUDER**
MULTI-SHAFT EXTRUDER
EXTRUDEUSE À PLUSIEURS ARBRES

(30) Priorität: 08.11.2006 DE 102006052610
(43) Veröffentlichungstag der Anmeldung: 16.09.2009
(73) Patentinhaber: Blach Verwaltungs GmbH & Co. KG, 74348 Laufen (DE)
(72) Erfinder: BLACH, Josef, 74348 Laufen (DE); BLACH, Michael, 74348 Laufen (DE); BLACH, Markus, 74348 Laufen (DE)
(74) Vertreter: LS-MP von Puttkamer Berngruber Loth Spuhler
(86) Internationale Anmeldenummer: PCT/EP2007/007961
(87) Internationale Veröffentlichungsnummer: WO 2008/055560

(56) Entgegenhaltungen:
- EP-B- 1 425 151
- WO-A-97/31767
- DE-A1- 19 536 289
- DE-C1- 19 604 228
- VORBERG F: 'COMPOUNDIEREN MIT ZWOELF WELLEN RINGEXTRUDER ZEIGT VORTEILE GEGENUEBER DER DOPPLESCHNECKE' KUNSTOFFE Bd. 90, Nr. 8, 01 August 2000, CARL HANSER VERLAG, MUNCHEN, DE, Seiten 60 - 62, XP000963682 ISSN: 0023-5563

## Beschreibung

Die Erfindung bezieht sich auf einen Extruder bestehend aus einem Antrieb und einen damit fest verbundenem Verfahrensteil mit mehreren im Kreis angeordneten Schneckenwellen nach dem Oberbegriff des Anspruchs 1 zur kontinuierlichen Aufbereitung von Stoffen.

Die mechanische und thermische Aufbereitung von Stoffen mit einem Extruder wird vielfach mehrstufig durch über die Verfahrenslänge verteilte Kombinationen von Förderabschnitten zum Mischen, Aufschmelzen, Benetzen, Dispergieren, Entgasen, Reagieren, usw., durchgeführt. Dabei werden unterschiedliche Stoffe in unterschiedlicher Form und Konsistenz als Granulat, Faser, Pulver, usw., die zumindest zum Teil viskos bis plastisch verformbar sind, zugeführt, verarbeitet und in einem plastischen, temperaturgeführten Prozess zu geformten Gegenständen, z.B. einem Profil, oder zu ungeformtem Granulat extrudiert. Wenn das Produkt dem Extruder bei Raumtemperatur zugeführt wird, wird der größte Teil der Energie zum Erwärmen und Plastifizieren benötigt. Zur übrigen verfahrenstechnischen Bearbeitung ist hingegen nur ein kleinerer Energieanteil erforderlich.

Nach EP 0 852 533 B1 wird für gleichsinnig drehende, dichtkämmende Doppelschneckenextruder mit einem Schneckenaußendurchmesser Da und einem Schneckeninnendurchmesser Di mit einem Da/Di-Verhältnis zwischen 1,4 und 1,6 sowie bei Drehzahlen über 600 UpM eine Drehmomentdichte von mindestens 11 Nm/cm³ verwendet, wobei die Drehmomentdichte das Verhältnis des Drehmoments je Welle zum Achsabstand³ (Md/a³) ist. Bei Ausrüstung der Doppelschneckenextruder mit Tragwelle und einem Aufstecksystem der Förderelemente mit einem Da/Di von 1,55 ist die Drehmomentdichte nach dem Stand der Technik mit 14 Nm/cm³ je Welle ein Grenzwert, der auch durch die Festigkeit der Tragwelle begrenzt ist. Bezogen auf einen Extruder mit zwei entsprechenden Wellen ergibt sich damit eine Drehmomentdichte von 28 Nm/cm³.

Die Leistungsfähigkeit eines Extruders mit gleichem Tragwellensystem ist weiter steigerungsfähig, wenn nach dem Artikel von Frank Vorberg in Kunststoffe 8/2000 ein Mehrwellenextruder gemäß dem Oberbegriff des Anspruchs 1 mit zwölf Wellen verwendet wird. Aus den in diesem Artikel genannten technischen Daten errechnet sich bei einem Da/Di-Verhältnis von 1,55 als Auslegungsdaten eine Drehmomentdichte Md/a³ je Welle zwar von nur 5 Nm/cm³ und eine relativ niedrige Wellenbelastung. Im Vergleich der Leistungsfähigkeit mit der Doppelschnecke liegt jedoch die Drehmomentdichte des Mehrwellenextruders mit 60 Nm/cm³ doppelt so hoch.

In EP 1 425 151 B1 wird das Verfahrensteil eines Mehrwellenextruders mit mindestens vier gleichsinnig drehenden, vollständig selbstreinigenden Schneckenwellen mit einem Da/Di-Verhältnis von 1,3 bis 1,7 für die Aufbereitung eines Polykondensats beschrieben. Wegen der hohen mechanisch-thermischen Produktbelastung wird die Drehzahl auf 600 UpM begrenzt, obwohl die Drehmomentdichte pro Welle mindestens 9 Nm/cm³ beträgt, was bei vier Wellen im Maschinenvergleich 36 Nm/cm³ bedeutet.

Aufgabe der Erfindung ist es, einen Mehrwellenextruder bereitzustellen, der eine große wirtschaftliche Leistung bei hoher Produktqualität und großer Einsatzbreite bietet.

Dies wird erfindungsgemäß mit dem im Anspruch 1 gekennzeichneten Mehrwellenextruder erreicht. In den Unteransprüchen sind vorteilhafte Ausgestaltungen der Erfindung wiedergegeben.

Der erfindungsgemäße Extruder weist einen Antrieb für wenigstens sechs im Kreis angeordnete Wellen auf, die über Kupplungen die koaxial angeordneten Wellen im Verfahrensteil zur Förderung und zum Druckaufbau gleichsinnig drehend antreiben. Die axiale Länge des Verfahrensteils beträgt mindestens 6 Da.

Nach der Erfindung weist der Mehrwellenextruder mindestens sechs auf einem Teilkreis angeordnete Wellen auf. Bei sechs Wellen ist im Allgemeinen eine Anordnung im geschlossenen Teilkreis möglich, sodass die Wellen in einem Ringraum zwischen dem Außengehäuse und dem Innengehäuse des Verfahrensteils angeordnet sind. Der entscheidende Vorteil dabei ist, die ideale Ausgewogenheit der wirksamen Kräfte sowohl im System des Verfahrensteils, und ganz besonders für das Antriebssystem, wo das Maschinendrehmoment als erste grundlegende Größe für Wirtschaftlichkeit und Produktqualität generiert wird.

Voraussetzung ist dabei die Einbringung des Drehmomentes des Antriebs über die Ritzel in die Wellen frei von Biegelast. Dies erfolgt durch einen radial gegenüberliegenden Eingriff der Zahnräder mit gleicher Kraft in die dazwischen liegenden Ritzel. Dadurch werden nicht nur die Radiallager der Wellen entlastet, sondern es entfällt vor allem die Biegewechsellast auf die Wellen, sodass das zulässige Drehmoment wesentlich erhöht werden kann. Zwecks Ausführung der Ritzel mit dem größtmöglichen Kopfkreisdurchmesser wird das Ritzel jeder zweiten Welle um etwas mehr als die Ritzelbreite und die Radiallagerbreite axial versetzt, sodass sich als kleinster Achsabstand mit Kopfkreisdurchmesser des Ritzels plus Wellendurchmesser plus Spiel ergibt.

Das mit dem Getriebe verbundene Verfahrensteil weist erfindungsgemäß mehrere im Kreis angeordnete Förderwellen auf, die von einem oder mehreren Außengehäuseabschnitten umschlossen werden. Die Förderwellen sind in einem ersten Abschnitt mit besonders dicht kämmenden 0,25 bis 2 Da langen Schnecken besetzt, die auch vom Gehäuse am ganzen Umfang dicht umschlossen sind, um den Verfahrensraum innen vom Luftraum außen zu trennen. Diesem folgt ein zweiter Abschnitt mit Förderschnecken in einer Länge zwischen 2,0 bis 6 Da, die von einem partiell nicht dichten und zum Luftraum offenen Gehäuse umschlossen sind. Dem zweiten Abschnitt folgt ein dritter Schneckenabschnitt, der mindestens 1,25 Da lang ist sowie radial und axial dicht kämmende Schnecken zum Druckaufbau aufweist, um das Produkt einer Förderstruktur in einem vierten Abschnitt zuzuführen, die unter Bildung von Stirnflächen mit fortschreitend zueinander winkelversetzten Kurvenscheiben oder Schneckenabschnitten mit einer beliebigen Gangsteigung, bei einer Mindestlänge von 1 Da und je Da Länge einen freien radialen Durchtrittsquerschnitt im Teilkreis von außerhalb nach innerhalb von mindestens ¼, insbesondere 1/3 der freien Förderfläche, aufweist (vgl. EP 0 422 272 B2 und DE 102 07 145 A1). Dadurch erfolgt ein radialer Stoff- und Druckausgleich von Gang zu Gang der durch die winkelversetzt angeordneten freien Stirnflächen der winkelversetzt angeordneten Einzelelemente bzw. Abschnitte besonders intensiv ist. Die einzelnen Elemente bzw. Abschnitte des einstückigen Elements, das die Förderstruktur bildet, können einzeln oder mehrfach hintereinander gleich oder unterschiedlich ausgebildet oder mit gleichem oder unterschiedlichem Winkel zueinander versetzt angeordnet sein. So kann die Winkelversetzung bei zweigängigen Schnecken 90°+- 60° betragen. Die durch die Winkelversetzung gebildeten frei werdenden Stirnflächen können senkrecht ausgebildet sein, beispielsweise bei einer aus Kurvenscheiben gebildeten Förderstruktur oder im Winkel zur Achse der Welle verlaufen.

Diesem Wellenabschnitt kann sich ein fünfter Wellenabschnitt anschließen, der eine Länge von mindestens 0,25 Da aufweist, und zusätzlich als Druckverbraucher ausgebildet ist. Durch den Druckverbraucher wird ein Fließwiderstand erzeugt und damit zusätzlich das Material aufgestaut. Der Druckverbraucher kann durch fördernde oder rückfördernde Schneckenelemente, rückfördernde Arbeitselemente, oder Stauscheiben und dergleichen gebildet sein. Um den erforderlichen Widerstand zu erzeugen, weist der Druckverbraucher eine Länge von mindestens 0,25 Da auf.

Der Außendurchmesser der Druckverbraucher kann gleich oder größer als der Achsabstand benachbarter Wellen sein, er ist jedoch höchstens so groß wie der Außendurchmesser Da der Förderschnecken.

Das Verhältnis Da/Di beträgt für zwei- und/oder eingängige Förderschnecken insbesondere 1,50 bis 1,93, vorzugsweise 1,6 bis 1,93. Das gleiche bevorzugte Da/Di-Verhältnis weist die Förderstruktur auf. Die auf die Maschine bezogene Drehmomentdichte Md/a³ des erfindungsgemäßen Extruders beträgt mindestens 50, vorzugsweise mindestens 100, insbesondere mindestens 160, und besonders bevorzugt mindestens 220 Nm/cm³, um die gewünschte hohe spezifische Leistung zu erzielen.

Auch die Abschnitte der Förderschnecken und Gehäuse können aus einem oder mehreren gleichen oder unterschiedlichen Elementen bestehen, die nacheinander angeordnet sind. So kann eine zweigängige rechtssteigende Förderschnecke eingängig und/oder zweigängig linkssteigend ganz oder teilweise auf die Länge und/oder die Gangtiefe gleich und/oder unterschiedlich freigeschnitten sein und umgekehrt, wodurch aus dem Schneckenkamm Inseln übrig bleiben.

Da die Wellen im geschlossenen Kreis angeordnet sind, entsteht ein eigenständiger Innenraum, der von den Schneckenwellen im wesentlichen dicht umschlossen ist. Einen Teil des Innenraums füllt das Inngehäuse aus, dessen äußere Form dem Außendurchmesser der Schneckenwellen entsprechend mit konkaven Vertiefungen versehen ist. Dabei ist vorzugsweise der Druckverbraucher an mindestens einer Welle über eine Länge von mindestens 0,25 Da von dem Innengehäuse nicht dicht umschlossen. Dazu können die konkaven Vertiefungen des Innengehäuses über die entsprechende Länge weggelassen sein.

Diese Maßnahme kommt insbesondere dann zum Tragen, wenn das Innengehäuse axial unterschiedlich positionierbar ausgeführt ist. Damit kann der Bereich des Innengehäuses, der den Druckverbraucher nicht dicht umschließt, aus diesem heraus axial in den Bereich eines Druckverbrauchers hinein positioniert werden, sodass die Wirkung des Druckverbrauchers also beispielsweise der rückfördernden Schneckenelemente, gestärkt und gleichzeitig möglichst die der Druckerzeuger geschwächt wird, damit der Füllgrad und die Verweildauer steigt und damit mehr Energie in das Produkt eingetragen wird, oder umgekehrt. Dabei kann das Innengehäuse von wenigstens einem Ende des Außengehäuses als Ganzes oder abschnittsweise gleich oder jeweils unterschiedlich axial positioniert werden, z. B. durch Versetzen oder Verschieben des nicht dicht umschließenden Bereichs des Innengehäuses in axialer Richtung.

Das Innengehäuse ist vorzugsweise kühlbar ausgebildet und das Außengehäuse heiz- und kühlbar. Das Außengehäuse und/oder das Innengehäuse kann ein- oder mehrschalig ausgebildet sein. Das Außengehäuse kann neben dem ersten und zweiten Gehäuseteilstück ein oder mehrere weitere Gehäusestücke mit einer Länge von vorzugsweise 2 bis 10 Da aufweisen, die zueinander positioniert, dicht zusammengehalten und mit oder ohne radial verschlossene Öffnungen ausgeführt sein können, wobei die Verschlüsse austauschbar oder radial verstellbar ausgeführt und über den Umfang oder die Länge verteilt nacheinander angeordnet sein können. Insbesondere können am Umfang eine oder mehrere in einer oder mehreren radialen Ebenen verteilte Öffnungen im Außengehäuseumfang zur Zuführung und/oder Ableitung von Stoffen vorgesehen sein. Diese Öffnungen können z. B. zur Zufuhr mit oder ohne Zufuhrvorrichtung von Pulvern oder Endlosfasern, gegebenenfalls in mehreren Strängen oder Gasableitung am Umfang des Außengehäuses symmetrisch einoder mehrfach gegenüberliegend horizontal und/oder in einem Winkel angeordnet sein.

Der erfindungsgemäße Extruder ist außer zum Aufschmelzen und Entgasen von Stoffen, insbesondere zum Benetzen von Feststoffen in Nanogröße bis zu Endlosfasern, zum Einarbeiten in Kunststoffe und dergleichen extrudierbare Stoffe bei großer Wirtschaftlichkeit und Qualität geeignet. Denn durch die hohe Drehmomentdichte der Maschine bringt sie mit dem anpassbaren Energieeintrag an den sehr unterschiedlichen Bedarf auch eine höhere Aufschmelzleistung bei einer relativ niedrigeren Umfangsgeschwindigkeit und damit Materialtemperatur.

Nachstehend ist die Erfindung anhand der beigefügten Zeichnungen beispielhaft näher erläutert. Darin zeigen:
- Figur 1: einen Längsschnitt durch den Mehrwellenextruder;
- Figur 2: einen Schnitt durch den Extruder entlang der Linie II-II nach Figur 1;
- Figur 3 und 4: eine perspektivische Ansicht bzw. Seitenansicht auf einen Knetblock sowie eine andere Ausführungsform der Förderstruktur;
- Figur 5: einen Schnitt entlang der Linie V-V in Figur 1;

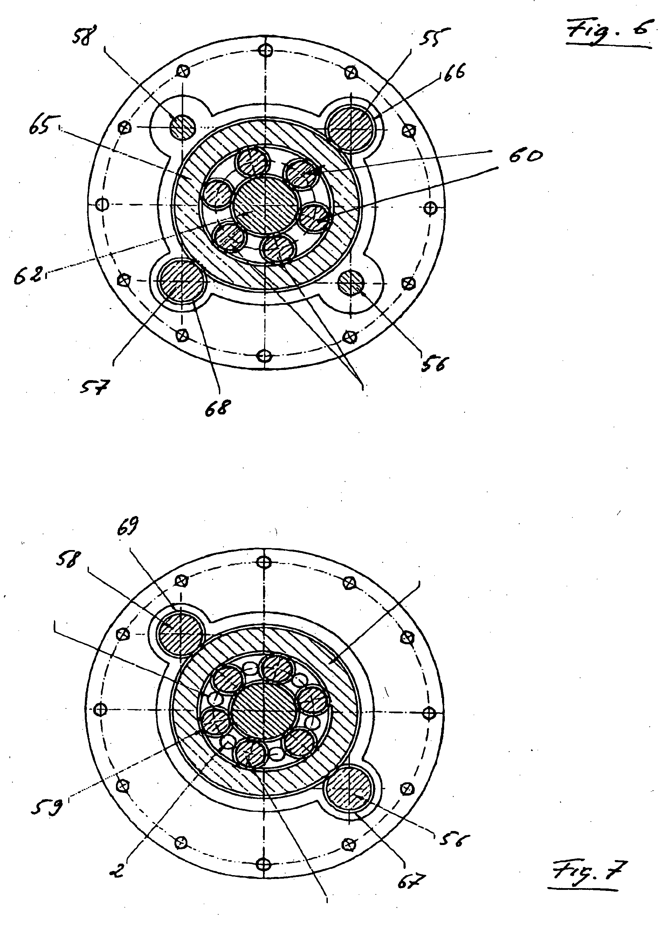

- Figur 6 und 7: einen Schnitt durch den Antrieb des Extruders entlang der Linie VI-VI bzw. VII-VII in Figur 1.

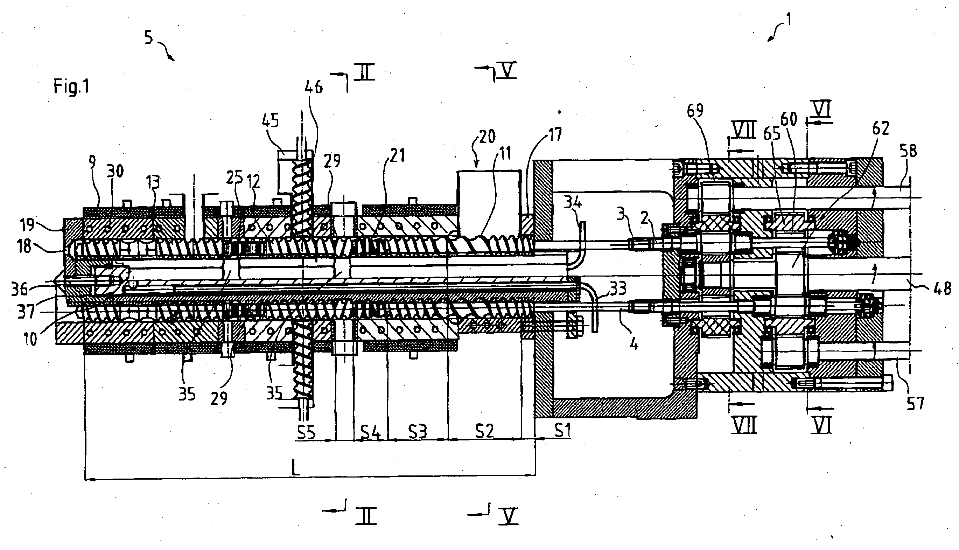

Gemäß Figur 1 besteht der Mehrwellenextruder aus einem Antrieb 1 mit zwölf auf einem Kreis angeordneten Ritzelwellen 2, die über Kupplungen 3 mit den Schneckenwellen 4 des Verfahrensteils 5 verbunden sind.

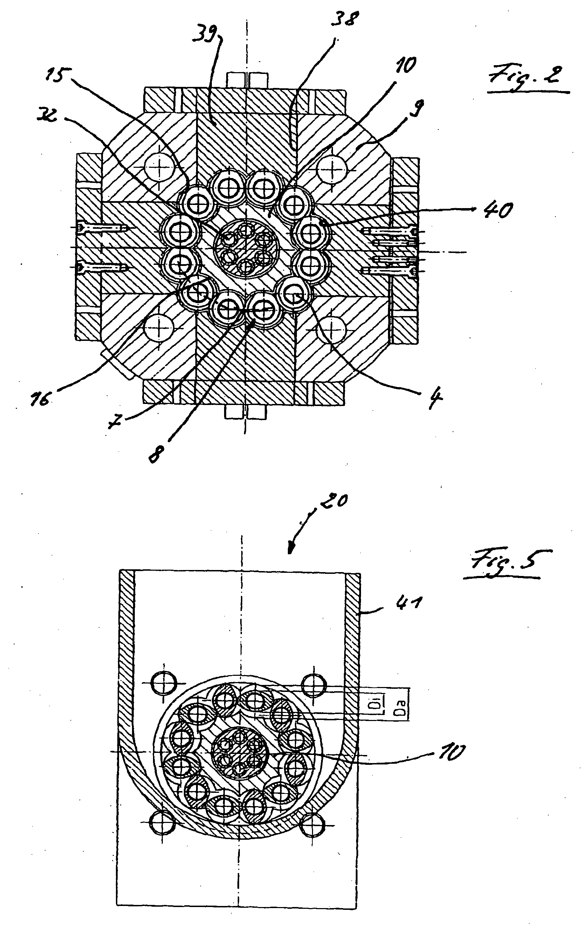

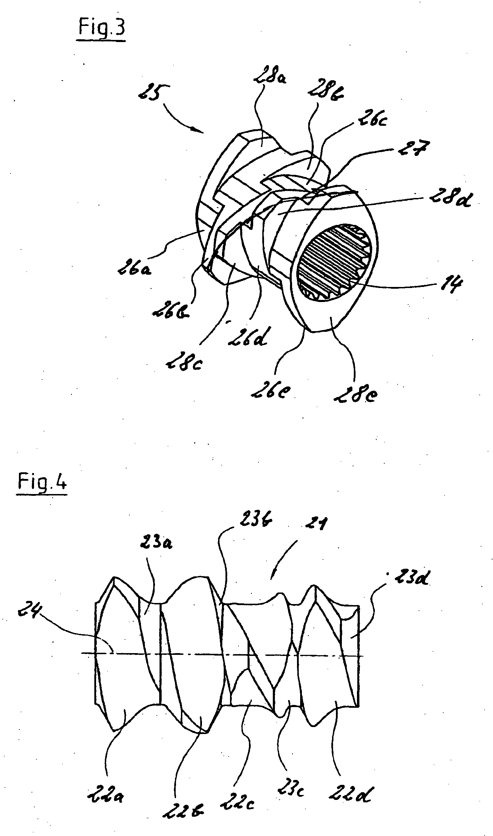

Die zwölf Wellen 4 des Verfahrensteils 5 sind gemäß Figur 2 auf einem Teilkreis 7 in einem Ringraum 8 zwischen einem Außengehäuse 9 und einem Innenkern oder Innengehäuse 10 achsparallel angeordnet und drehen sich gleichsinnig. Die Schneckenwellen 4 sind mit ineinandergreifenden Förderschnecken 11, 12, 13 und anderen Elementen drehfest verbunden. Dazu sind sie über eine Kerbverzahnung 14 (vgl. Figur 3) auf die Wellen 4 aufgesteckt.

Gemäß Figur 2 ist das Außengehäuse 9 an der Innenseite mit achsparallelen konkaven Kreissegmenten 15 versehen. Desgleichen weist das Innengehäuse 10 achsparallele konkave Kreissegmente 16 auf. Die Kreissegmente 15, 16 nehmen die jeweilige Welle 4 auf und führen sie.

Das eine Ende des Außengehäuses 9 ist förderaufseitig gemäß Figur 1 durch eine Endplatte 17 verschlossen. Ferner sind mehrere Materialaustrittsöffnungen 18 in der förderabseitigen Endplatte 19 vorgesehen.

Die axiale Förderlänge L des Verfahrensteils 5 beträgt z. B. 20 Da, wobei Da der Außendurchmesser der Förderschnecken 11, 12, 13 ist.

Der Verfahrensteil 5 weist im Anschluss an die Endplatte 17 einen ersten Abschnitt S1 mit einer Länge von beispielsweise 0,5 Da auf, der von dem Außengehäuse 9 und dem Innengehäuse 10 dicht umschlossen und mit dicht kämmenden Förderschnecken 11 versehen ist. An den ersten Abschnitt S1 schließt sich ein zweiter Abschnitt S2 mit einer Länge von z. B. 6 Da an, in dem gleichfalls Förderschnecken 11 vorgesehen sind. Im Abschnitt S2 ist das Außengehäuse 9 auf eine Länge von z. B. 5 Da mit der Materialzuführöffnung 20 versehen, sodass die Förderschnecken 11 im Abschnitt S2 von einem partiell nicht dichten Außengehäuse 9 umschlossen sind.

An den zweiten Abschnitt S2 schließt sich ein dritter Abschnitt S3 mit einer Länge von beispielsweise 4 Da an, der von dem Außengehäuse 9 und dem Innengehäuse 10 dicht umschlossen ist und in dem die Förderschnecken 11 ebenfalls dicht kämmend ausgebildet sind. Dem dritten Abschnitt S3 folgt ein vierter Abschnitt S4 mit einer Länge von z. B. 2 Da mit einer Förderstruktur 21. Die Förderstruktur 21 wird gemäß Figur 4 durch ein einstückiges Element gebildet, das aus fortschreitend zueinander winkelversetzt angeordneten kurzen Schneckenabschnitten 22a bis 22d besteht. Dadurch werden freie Stirnflächen 23a bis 23d gebildet, die gegenüber der Wellenachse 24 geneigt sind.

In Figur 3 ist eine andere Ausführungsform einer Förderstruktur 25 dargestellt, nämlich ein Knetblock, der aus Kurvenscheibenabschnitten 26a bis 26e besteht, die, wie durch die Linie 27 angedeutet, ebenfalls mit einer Steigungsrichtung entsprechend den Förderschnecken 11 bis 13 angeordnet sind, wodurch freie, zur Wellenachse senkrechte Stirnflächen 28a bis 28e gebildet werden. Der radial freie Durchschnittsquerschnitt im Teilkreis 7 von außen nach innen beträgt bei den Förderstrukturen 21 und 25 mindestens ein Viertel, insbesondere mindestens ein Drittel der freien Maschinenförderfläche.

Gemäß Figur 1 schließt sich an den vierten Abschnitt S4 ein fünfter Abschnitt S5 an, in dem die Wellen 4 mit einem Druckverbraucher versehen sind. Durch den Druckverbraucher wird bei hoher Fließwiderstand erzeugt und damit das Material gestaut. Der Druckverbraucher kann, wie in Figur 1 dargestellt, durch rückfördernde Schneckenelemente 21 gebildet sein, aber auch durch rückfördernde Arbeitselemente, wie rückfördernde Knetblöcke, Stauscheiben oder dergleichen. Auch kann er durch fördernde Schnecken oder Schnecken- oder Arbeitselemente gebildet werden. Um den erforderlichen Druckaufbau zu erzeugen, weist der fünfte Abschnitt S5 eine Länge von mindestens 0,25 Da auf.

Gemäß Figur 1 ist das Außengehäuse 9 mit Kanälen 30 versehen, durch die eine Wärme- oder Kälteflüssigkeit geleitet wird, um das Außengehäuse 9 zu heizen und/oder zu kühlen. Aus Figur 2 ist ersichtlich, dass das Innengehäuse 10 Axialbohrungen 32 aufweist, um es z. B. mit einer Flüssigkeit zu erwärmen und/oder zu kühlen, die über die Anschlüsse 33, 34 zu- bzw. abgeführt wird.

Wie Figur 1 entnommen werden kann, sind an dem Innengehäuse 10 in dem Bereich 35 der rückfördernden Schneckenelemente 29, die den Druckverbraucher bilden, die konkaven Vertiefungen 16 abgetragen oder weggelassen. Damit wird der Druckverbraucher in diesen Bereichen nicht mehr dicht umschlossen, also der Fließwiderstand, den die rückfördernden Schneckenelemente 29 erzeugen, reduziert.

Das Innengehäuse 10 ist in der der Materialaustrittsöffnung 18 zugewandten förderabseitigen Endplatte 19 schwimmend gelagert. Es kann damit verschoben werden. Dazu wird die Schraube 36 gelöst, mit der das Innengehäuse 10 an der Endplatte 19 fixiert ist und die Position des Bereichs 35 des Innengehäuses 10 z.B. mit einem Distanzring 37 eingestellt. Damit kann der Fließwiderstand des Druckverbrauchers eingestellt werden.

Gemäß Figur 2 weist das Außengehäuse 9 in einer Radialebene vier über den Umfang verteilte Öffnungen 38 auf, die jeweils mit einem Stopfen 39 verschließbar sind. Die dem Innengehäuse 10 zugewandte Oberfläche der Stopfen 39 ist entsprechend den Kreissegmenten 15 an der Innenwand des Außengehäuses 9 ebenfalls mit konkaven Kreissegmente 40 versehen. Damit kann durch teilweises Herausziehen der Stopfen 39 die Wirkung des Druckverbrauchers im Bereich der Öffnungen 38 verändert werden.

Gemäß Figur 5 weist die Materialzuführöffnung 20 einen Zufuhrstutzen 41 auf.

Zudem können gemäß Figur 1 weitere Öffnungen im Außengehäuse 9 vorgesehen sein, an denen jeweils ein Einbau 45 mit einer Förderschnecke 46 angeordnet ist.

Die Schneckenwellen 4, die sich durch die förderaufseitige Endplatte 17 erstrecken, werden von dem Antrieb 1 gleichsinnig drehend angetrieben. Gemäß Figur 1 ist der Antrieb 1 mit der Endplatte 17 des Verfahrensteils 5 über ein Verbindungsgehäuse 47 verbunden.

Der Antrieb 1 weist eine nicht dargestellte Hauptantriebswelle auf, die über ein Verzweigungsgetriebe eine dazu koaxial innenliegende Antriebswelle 48 sowie vier außen liegende achsparallele Antriebswellen 55 bis 58 antreibt.

An den Ritzelwellen 2, die die Abtriebswellen des Antriebs 1 bilden, ist jeweils ein Ritzel 59, 60 drehfest befestigt und zwar vorzugsweise durch einstückige Ausbildung der Welle 2 und des Ritzels 59 bzw. 60. Die Ritzel 59, 60 benachbarter Wellen 2 sind axial versetzt angeordnet, d. h. die Ritzel 59 sind näher als die Ritzel 60 am Verfahrensteil 5 angeordnet.

Die zentrale Antriebswelle 48 ist drehfest mit zwei axial versetzten innenliegenden außen verzahnten Antriebsrädern 61, 62 versehen, die mit den Ritzeln 59, 60 kämmen. Die Ritzel 59, 60 werden sowohl von den zentralen außen verzahnten Antriebsrädern 61, 62 als auch von dem radial gegenübliegend angeordneten, umfassenden, innenverzahnten Hohlrad 64, 65 angetrieben, welche ihrerseits entsprechend axial versetzt angeordnet sind.

Jedes Hohlrad 64, 65 ist mit einer Außenverzahnung versehen, mit der ein außen verzahntes Antriebsrad 66 bis 69 auf den vier außen liegenden Antriebswellen 55 bis 58 kämmt. Die außen liegenden Antriebsräder 66 bis 69 sind entsprechend den Ritzeln 59, 60 bzw. den innen liegenden Antriebsrädern 61, 62 bzw. den Hohlrädern 64, 65 axial versetzt angeordnet.

Der Antrieb der außen liegenden Antriebsräder 66 bis 69 und wie dargestellt der zusätzlichen Antriebsräder 61 und 62 der zentralen Antriebswelle 48 kann durch getrennte elektrische Antriebsmotore je Welle, oder mit mechanischer Leistungsverzweigung erfolgen.

Die Hohlräder 64, 65 sind hier durch je zwei außen liegenden diametral gegenüberliegenden Antriebsräder 66, 68 bzw. 67, 69 damit weitgehend kräfteneutral zentriert. Grundsätzlich ist jedoch nun ein Antriebsrad je Hohlrad nötig.

Damit weist der Antrieb 1 in zwei baugleiche Gruppen geteilte, auf einem Kreis 7 angeordnete Ritzelwellen 2, die radial von innen und von außen mit gleichen Kräften und in gleicher Richtung und diametral gegenüberliegend angetrieben und über Kupplungen 3 koaxial an die Schneckenwellen 4 des Verfahrensteils 5 angeschlossen sind.

## Patentansprüche

1. Mehrwellenextruder bestehend aus einem Antrieb (1) und einem damit verbundenen Verfahrensteil (5) mit wenigstens sechs in einem Kreis (7) zwischen einem Außengehäuse (9) und einem Innengehäuse (10) angeordneten achsparallelen, gleichsinnig drehenden Schneckenwellen (4), die mit ineinander greifenden Förderschnecken (11, 12, 13) und anderen Elementen drehfest verbunden sind, wobei das Außengehäuse (9) an der Innenseite und das Innengehäuse (10) mit achsparallelen, konkaven Kreissegmenten (15, 16) versehen sind, die die jeweilige Schneckenwelle (4) aufnehmen und mit wenigstens einer Materialzuführöffnung (20) an einem Ende des Außengehäuses (9) und wenigstens einer Materialaustrittsöffnung (18), wobei die Schneckenwellen (4) eine Förderlänge (L) von mindestens sechs Da und ein Da/Di-Verhältnis von 1,5 bis 1,93 aufweisen, wobei Da der Außendurchmesser und Di der Innendurchmesser der Förderschnecken (11, 12, 13) ist, und wobei der Antrieb (1) zwei in baugleiche Gruppen geteilte, auf einem Kreis (7) angeordnete Ritzelwellen (2) aufweist, die radial von innen und von außen mit gleichen Kräften und in gleicher Richtung und diametral gegenüberliegend angetrieben und über Kupplungen (3) koaxial an die Schneckenwellen (4) des Verfahrensteils (5) angeschlossen sind, **dadurch gekennzeichnet, dass** die Drehmomentdichte des Extruders mindestens 100 Nm/cm³ beträgt, wobei der Verfahrensteil (5) an dem dem Antrieb (1) zugewandten Ende einen ersten Abschnitt (S1) mit einer Länge von 0,25 bis 2 Da aufweist, der von dem Außengehäuse (9) und dem Innengehäuse (10) dicht umschlossen und mit dicht kämmenden Förderschnecken (11) versehen ist, an den sich ein zweiter Abschnitt (S2) mit einer Länge von 2 bis 12 Da mit Förderschnecken (11) anschließt, die von einem partiell nicht dichten Außengehäuse (9) mit der Zufuhröffnung (20) mit einer Länge von maximal 6 Da umschlossen sind, gefolgt von einem dritten Abschnitt (S3) mit einer Länge von mindestens 1,25 Da, der von dem Außengehäuse (9) und dem Innengehäuse (10) dicht umschlossen und mit dicht kämmenden Förderschnecken (11) versehen ist, an den sich ein vierter Abschnitt (S4) mit einer Länge von mindestens 1 Da anschließt, der unter Bildung von Stirnflächen (23a bis 23d, 28a bis 28d) fortschreitend zueinander winkelversetzte Schneckenabschnitte (22a bis 22e) oder Kurvenscheiben (26a bis 26e) und einen radial freien Durchtrittsquerschnitt im Teilkreis (7) von außen nach innen von mindestens ¼ der freien Maschinenförderfläche aufweist.

2. Mehrwellenextruder nach Anspruch 1, **dadurch gekennzeichnet, dass** die Drehmomentdichte des Extruders mindestens 160 Nm/cm³ beträgt.

3. Mehrwellenextruder nach Anspruch 1, **dadurch gekennzeichnet, dass** die Drehmomentdichte des Extruders mindestens 220 Nm/cm³ beträgt.

4. Mehrwellenextruder nach Anspruch 1, **dadurch gekennzeichnet, dass** das Da/Di-Verhältnis 1,6 bis 1,93 beträgt.

5. Mehrwellenextruder nach Anspruch 1, **dadurch gekennzeichnet, dass** das Innengehäuse (10) an einem oder beiden Enden des Außengehäuses (9) radial fest und von einem oder beiden Enden des Außengehäuses (9) her axial einstellbar angeordnet sind.

6. Mehrwellenextruder nach Anspruch 1, **dadurch gekennzeichnet, dass** sich an den vierten Abschnitt (S4) ein fünfter Abschnitt (S5) mit einer Länge von mindestens 0,25 Da anschließt, in dem die Wellen (4) als Druckverbraucher wirken.

7. Mehrwellenextruder nach Anspruch 6, **dadurch gekennzeichnet, dass** die Druckverbraucher fördernde oder rückfördernde Schneckenelemente oder Arbeitselemente oder Stauscheiben sind.

8. Mehrwellenextruder nach Anspruch 1, **dadurch gekennzeichnet, dass** der erste Abschnitt (S1) und der zweite Abschnitt (S2) und der dritte Abschnitt (S3) insgesamt maximal eine Länge von 16 Da aufweisen.

9. Mehrwellenxtruder nach Anspruch 1, **dadurch gekennzeichnet, dass** der erste Abschnitt (S1) und der zweite Abschnitt (S2) und der dritte Abschnitt (S3) insgesamt maximal eine Länge von 12 Da aufweisen.

10. Mehrwellenextruder nach Anspruch 1, **dadurch gekennzeichnet, dass** der erste Abschnitt (S1) und der zweite Abschnitt (S2) und der dritte Abschnitt (S3) insgesamt eine Länge von maximal 8 Da aufweisen.

11. Mehrwellenextruder nach Anspruch 1 oder 6, **dadurch gekennzeichnet, dass** an dem Innengehäuse (10) die konkaven Vertiefungen (16) auf eine Länge von mindestens 0,25 Da zumindest teilweise weggelassen sind, sodass der Druckverbraucher nicht dicht umschlossen ist.

12. Mehrwellenextruder nach Anspruch 11, **dadurch gekennzeichnet, dass** nicht dichte Innengehäuseabschnitte von dem Druckverbraucher in gleichen oder verschiedenen Abständen und Ausführungen umschlossen sind.

13. Mehrwellenextruder nach Anspruch 1, **dadurch gekennzeichnet, dass** die Förderschnecke einen zweigängigen fördernden oder rückfördernden Schneckenabschnitt aufweist, der ein- und/oder zweigängig in rückfördernder bzw. fördernder Schneckenrichtung mit gleicher oder unterschiedlicher Steigung ganz oder teilweise auf die Länge und/oder Gangtiefe freigeschnitten ist.

14. Mehrwellenextruder nach Anspruch 1, **dadurch gekennzeichnet, dass** das Innengehäuse (10) ein- oder mehrstückig und in einer oder mehreren Zonen kühl- und/oder heizbar ausgebildet ist.

15. Mehrwellenextruder nach Anspruch 1, **dadurch gekennzeichnet, dass** das Außengehäuse (9) heiz- und/oder kühlbar und ein- oder mehrschalig ausgebildet ist.

16. Mehrwellenextruder nach Anspruch 1, **dadurch gekennzeichnet, dass** das Außengehäuse (9) über seinen Umfang und/oder über seine Länge verteilte verschließbare Öffnungen (38) zur Zuführung und/oder Ableitung von Stoffen mit oder ohne Zuführvorrichtung aufweist.

## Claims

1. Multi-shaft extruder comprising a drive (1) and a processing section (5) connected thereto which has at least six axially parallel, co-rotating worm shafts (4) arranged in a circle (7) between an outer housing (9) and an inner housing (10) which are connected to intermeshing screw conveyors (11, 12, 13) and other elements so as to rotate therewith, wherein the outer housing (9) on the inner surface thereof and the inner housing (10) are provided with axially parallel, concave circular segments (15, 16) receiving the respective worm shaft (4), and which has at least one material feed opening (20) at one end of the outer housing (9) and at least one material discharge opening (18), wherein the worm shafts (4) have a conveying length (L) of at least six Do and a Do/Di ratio of 1,5 to 1,93, wherein Do is the outer diameter and Di is the inner diameter of the screw conveyors (11, 12, 13), and wherein the drive (1) has two pinion shafts (2) partitioned into two groups of identical construction and arranged on a circle (7), which are driven radially from the inside and from the outside at equal forces and in the same direction and in diametrical opposition and which are coaxially connected to the worm shafts (4) of the processing section (5) via couplings (3), **characterized in that** the torque density of the extruder is at least 100 Nm/cm³, wherein, at the end facing the drive (1), the processing section (5) comprises a first section (S1) which has a length of 0,25 to 2 Do, is tightly surrounded by the outer housing (9) and the inner housing (10) and provided with tightly intermeshing screw conveyors (11), with the first section being adjoined by a second section (S2) which has a length of 2 to 12 Do and comprises screw conveyors (11) which are surrounded by a partially non-tight outer housing (9) with the feed opening (20) having a length of not more than 6 Do, followed by a third section (S3) which has a length of at least 1,25 Do, is tightly surrounded by the outer housing (9) and the inner housing (10) and provided with tightly intermeshing screw conveyors (11), with the third section being adjoined by a fourth section (S4) which has a length of at least 1 Do and has, while forming end faces (23a to 23d, 28a to 28d), screw sections (22a to 22e) or cam disks (26a to 26e), which are progressively angularly offset relative to one another, and a radially free passage cross section in the pitch circle (7) from the outside to the inside of at least ¼ of the free machine conveying surface.

2. Multi-shaft extruder according to claim 1, **characterized in that** the torque density of the extruder is at least 160 Nm/cm³.

3. Multi-shaft extruder according to claim 1, **characterized in that** the torque density of the extruder is at least 220 Nm/cm³.

4. Multi-shaft extruder according to claim 1, **characterized in that** the Do/Di ratio is 1,6 to 1,93.

5. Multi-shaft extruder according to claim 1, **characterized in that** the inner housing (10) is arranged radially securely at one or both ends of the outer housing (9) and so as to be axially adjustable from one or both ends of the outer housing (9).

6. Multi-shaft extruder according to claim 1, **characterized in that** the fourth section (S4) is adjoined by a fifth section (S5) which has a length of at least 0,25 Do and in which the shafts (4) act as pressure consumers.

7. Multi-shaft extruder according to claim 6, **characterized in that** the pressure consumers are conveying or re-conveying screw elements or working elements or baffle plates.

8. Multi-shaft extruder according to claim 1, **characterized in that** the first section (S1) and the second section (S2) and the third section (S3) have a total length of not more than 16 Do.

9. Multi-shaft extruder according to claim 1, **characterized in that** the first section (S1) and the second section (S2) and the third section (S3) have a total length of not more than 12 Do.

10. Multi-shaft extruder according to claim 1, **characterized in that** the first section (S1) and the second section (S2) and the third section (S3) have a total length of not more than 8 Do.

11. Multi-shaft extruder according to claim 1 or 6, **characterized in that** on the inner housing (10) the concave recesses (16) are at least partly omitted over a length of at least 0,25 Do so that the pressure consumer is not tightly surrounded.

12. Multi-shaft extruder according to claim 11, **characterized in that** non-tight inner housing sections are surrounded by the pressure consumer at the same or different distances and in the same or different embodiments.

13. Multi-shaft extruder according to claim 1, **characterized in that** the screw conveyor has a double-flighted conveying or re-conveying screw section which, in a single-flighted or double-flighted manner in the re-conveying and/or conveying screw direction at the same or different pitch, is wholly or partly cut free over the length and/or the flight depth.

14. Multi-shaft extruder according to claim 1, **characterized in that** the inner housing (10) is configured in one or more pieces and so as to be coolable and/or heatable in one or more zones.

15. Multi-shaft extruder according to claim 1, **characterized in that** the outer housing (9) is configured so as to be heatable and/or coolable and with one or more shells.

16. Multi-shaft extruder according to claim 1, **characterized in that** the outer housing (9) has closable openings (38) which are distributed over its circumference and/or over its length for feeding and/or discharging substances with or without a feeding device.

## Revendications

1. Extrudeuse à plusieurs arbres, constituée par un entraînement (1) et une pièce de processus (5) reliée à celui-ci, comportant au moins six arbres à vis sans fin (4) parallèles à l'axe et tournant dans le même sens, agencés dans un cercle (7) entre un boîtier extérieur (9) et un boîtier intérieur (10), qui sont reliés solidaires en rotation avec des convoyeurs à vis sans fin (11, 12, 13) s'engageant les uns dans les autres et avec d'autres éléments, le boîtier extérieur (9), le boîtier extérieur (9), sur la face intérieure, et le boîtier intérieur (10) étant pourvus de segments de cercle (15, 16) concaves parallèles à l'axe qui reçoivent l'arbre à vis sans fin (4) respectif, et d'au moins un orifice d'alimentation en matériau (20) à une extrémité du boîtier extérieur (9) et au moins d'un orifice de sortie de matériau (18), les arbres à vis sans fin (4) présentant une longueur de transport (L) d'au moins six De et un rapport De/Di de 1,5 à 1,93, De étant le diamètre extérieur et Di le diamètre intérieur des convoyeurs à vis sans fin (11, 12, 13), et l'entraînement (1) présentant deux arbres de pignon (2) divisés en groupes de construction identique et agencés sur un cercle (7), lesquels, entraînés radialement depuis l'intérieur et depuis l'extérieur avec les mêmes forces et dans la même direction et de manière diamétralement opposée, sont raccordés via des embrayages (3) coaxialement aux arbres à vis sans fin (4) de la pièce de processus (5), **caractérisée en ce que** la densité de couple de l'extrudeuse est d'au moins 100 Nm/cm³, la pièce de processus (5) présentant, à l'extrémité tournée vers l'entraînement (1), un premier tronçon (S1) avec une longueur de 0,25 à 2 De, qui est entouré de manière étanche par le boîtier extérieur (9) et par le boîtier intérieur (10) et qui est pourvu de convoyeurs à vis sans fin (11) à engrènement serré, auquel se raccorde un deuxième tronçon (S2) avec une longueur de 2 à 12 De avec des convoyeurs à vis sans fin (11) qui sont entourés d'un boîtier extérieur (9) partiellement non étanche avec l'orifice d'amenée (20) avec une longueur de 6 De au maximum, suivi d'un troisième tronçon (S3) avec une longueur d'au moins 1,25 De qui est entouré de manière étanche par le boîtier extérieur (9) et par le boîtier intérieur (10) et qui est pourvu de convoyeurs à vis sans fin (11) à engrènement serré, auquel se raccorde un quatrième tronçon (S4) avec une longueur d'au moins 1 De qui, en formant des surfaces frontales (23a à 23d, 28a à 28d) présente des tronçons de vis sans fin (22a à 22e) ou des disques de cames (26a à 26e) progressivement décalés angulairement les uns par rapport aux autres et une section de passage radialement libre dans la partie de cercle (7) depuis l'extérieur vers l'intérieur d'au moins ¼ de la surface de transport libre de la machine.

2. Extrudeuse à plusieurs arbres selon la revendication 1, **caractérisée en ce que** la densité de couple de l'extrudeuse est d'au moins 160 Nm/cm³.

3. Extrudeuse à plusieurs arbres selon la revendication 1, **caractérisée en ce que** la densité de couple de l'extrudeuse est d'au moins 220 Nm/cm³.

4. Extrudeuse à plusieurs arbres selon la revendication 1, **caractérisée en ce que** le rapport De/Di est de 1,6 à 1,93.

5. Extrudeuse à plusieurs arbres selon la revendication 1, **caractérisée en ce que** le boîtier intérieur (10) est agencé de manière radialement fixe à une ou aux deux extrémités du boîtier extérieur (9) et est axialement réglable depuis une ou les deux extrémités du boîtier extérieur (9).

6. Extrudeuse à plusieurs arbres selon la revendication 1, **caractérisée en ce qu'**au quatrième tronçon (S4) se raccorde un cinquième tronçon (S5) avec une longueur d'au moins 0,24 De, dans lequel les arbres (4) agissent en tant que consommateurs de pression.

7. Extrudeuse à plusieurs arbres selon la revendication 6, **caractérisée en ce que** les consommateurs de pression sont des éléments à vis sans fin de transport ou de refoulement ou des éléments de travail ou des disques de retenue.

8. Extrudeuse à plusieurs arbres selon la revendication 1, **caractérisée en ce que** le premier tronçon (S1) et le deuxième tronçon (S2) et le troisième tronçon (S3) présentent au total une longueur de 16 De.

9. Extrudeuse à plusieurs arbres selon la revendication 1, **caractérisée en ce que** le premier tronçon (S1) et le deuxième tronçon (S2) et le troisième tronçon (S3) présentent au total une longueur de 12 De.

10. Extrudeuse à plusieurs arbres selon la revendication 1, **caractérisée en ce que** le premier tronçon (S1) et le deuxième tronçon (S2) et le troisième tronçon (S3) présentent au total une longueur de 8 De au maximum.

11. Extrudeuse à plusieurs arbres selon la revendication 1 ou 6, **caractérisée en ce que** sur le boîtier intérieur (10), les renfoncements (16) concaves sont au moins partiellement supprimés sur une longueur d'au moins 0,25 De, de telle sorte que le consommateur de pression n'est pas entouré de manière étanche.

12. Extrudeuse à plusieurs arbres selon la revendication 11, **caractérisée en ce que** des tronçons de boîtier intérieur non étanches sont entourés par le consommateur de pression à des espacements identiques ou différents et dans des réalisations identiques ou différentes.

13. Extrudeuse à plusieurs arbres selon la revendication 1, **caractérisée en ce que** le convoyeur à vis sans fin présente un tronçon de vis sans fin de transport ou de refoulement à double pas qui, à un pas et/ou à deux pas, est découpé entièrement ou partiellement, avec le même pas ou un pas différent, à la longueur et/ou à la profondeur de filet en direction de vis sans fin de refoulement ou de convoyage, respectivement.

14. Extrudeuse à plusieurs arbres selon la revendication 1, **caractérisée en ce que** le boîtier intérieur (10) est réalisé en une seule pièce ou en plusieurs pièces et peut être refroidi et/ou chauffé dans une ou plusieurs zones.

15. Extrudeuse à plusieurs arbres selon la revendication 1, **caractérisée en ce que** le boîtier extérieur (9) est réalisé de manière à pouvoir être chauffé et/ou refroidi et à une coque ou à plusieurs coques.

16. Extrudeuse à plusieurs arbres selon la revendication 1, **caractérisée en ce que** le boîtier extérieur (9) présente des orifices (38) pouvant être fermés et répartis sur sa périphérie et/ou sur sa longueur pour amener et/ou évacuer des matières avec ou sans dispositif d'alimentation.
